(19) Europäisches Patentamt
European Patent Office
Office européen des brevets

(11) EP 1 840 179 A1

(12) EUROPEAN PATENT APPLICATION

(43) Date of publication:
**03.10.2007 Bulletin 2007/40**

(51) Int Cl.:
***C09J 7/02** (2006.01)* ***B44C 1/10** (2006.01)*

(21) Application number: **06075933.9**

(22) Date of filing: **21.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.03.2006 NL 1031443**

(71) Applicant: **Pieck, Theodorus Henricus**
**3641 GZ Mijdrecht (NL)**

(72) Inventor: **Pieck, Theodorus Henricus**
**3641 GZ Mijdrecht (NL)**

(54) **Self-adhering plastic film provided with a durable decorative layer of paint**

(57) The invention concerns a self-adhering plastic film provided with a durable decorative and protective layer of paint, which film is applicable on a smooth treated substrate of larger surfaces of, for example, building constructions, such as doors, panels and such, vehicles and subjects with large surfaces generally applicable in a economical responsible way and especially in open air and/or more or less corrosive or caustic environments.

EP 1 840 179 A1

## Description

The present invention relates to a film or foil designed as self-adhering plastic film, which is provided with an adhering layer with removable covering on one side, such as films often available on the market and on the other side of the film is provided with a layer of paint, in which said film serves as protection for surfaces of engineering structures, vehicles or subjects in general and such against more or less corrosive environments and, of course, also for decoration by a colour combination of said surfaces. Possibly, after consultation also availalbe with a high elastic Erichsen impress of approximately 6 mm or more.

A protective film is known from the American Patent document US 2002/0192462A1, submitted on March 26th, 2002 from applicant/inventor HIROSHI KONDO, Japan and titled: "Application sheet used for Pressure Sensitive Adhesive sheet for Painting and Method of Attaching the Pressure Sensitive Adhesive Sheet for Painting". It concerns an application sheet or film (application sheet) for adhering to said film on the surface of a paint layer. The film concerned consists of a pressure sensitive adhesive layer, which is stuck on the paint layer by pressure. It concerns only a protective film to avoid that scratches of damages are caused to the paint layer of the subject or engineering part to be protected. Therefore this is only a protective film, which does not serve to decorate the product to be protected or provide it with a paint layer or colour, for which the film concerned is not suitable.

Further from the PCT-application PCT/US95/13969 with WO 96/13547 a film is known, submitted on October $27^{th}$, 1995, applicant CAL-WEST EQUIPMENT COMPANY Inc., Sunnyvale, USA with inventors SWINDLER, Ronald and WOODHALL, Edward, USA, titled: "polymeric Peel-off Coating Compositions and Method of Use Thereof". Here, it also concerns a film only for protecting external surfaces of vehicles and other products or components of products against wear, dust, acid rain and such.

The disadvantage is also, that this is not a painted film to decorate the product to be protected, which was the difficult and complicated problem to be solved for the present invention. In short, the known films are not useable for decoration and protection of subjects at the same time.

It is the aim of the present invention to provide such a self-adhering film provided with a decorative and protective paint layer, which does not have the shortcomings and/or disadvantages of the known films on the market and in which these films can serve as replacement of well sanded paint layers, (for example wet with waterproof sandpaper and/or dry with SandBlaster from 3M or mechanically with HookitP both with roughness nr. 320) on preferably smooth engineering structures and/or larger surfaces of vehicles, subjects and such.

For this, a film according to the invention designed in an inventive way provided with a self-adhering film layer on one side and is provided with a well adhesive, robust in all possible colours designed paint layer, resistant to aggressive and abrasive environments on the other side, characterized in that, said film is a plastic film with thickness D1, in which on one side the surface of the film is pre-treated with a special or roughening sponge for applying a layer of paint with thickness D2, in which distilled water with an added 1:n volume part cleaner is used, after which a primer layer with thickness D3 is applied, in which the other side of the film is provided with an adhering layer with a UV-resistant glue, in which said adhering layer is finished before use with a removable covering in the shape of a disposable film.

The advantage is, that an excellent decorative and finished paint surface is achieved for larger surfaces, which is obtained in an economic responsible way and which has a very durable characteristic. The life is, as shown in tests, many times longer in relation to normal surfaces painted in a professional way.

Further, the film according to the invention is further developed in such a way, characterized in that, said sponge is a specially layered scourer, with the main characteristics of roughness of approximately Scotch-Brite Scuf sponges fine from 3M, colour light grey or a similar product.

The advantage is, a quick roughening of the film surface to be painted.

Further, the film according to the invention is further developed in such a way, that said cleaner as replacement of ammonia is a biodegradable product, such as, for example, Universol, in which n is approximately 100. Universol is the replacement for ammonia and has the advantages that it is environmentally friendly, does not foam, does not have to be rinsed off, is biodegradable and has a dilution of 1:100.

Universol is an environmentally friendly, phosphate-free, biodegradable super degreaser, developed especially for removing most kinds of contamination on almost every substrate. It is also suitable for degreasing and making the substrate antistatic for paintwork.

Further, the film according to the invention is further developed in such a way, that said primer layer with thickness D3 of approximately 5-10$\mu$m is constructed with an acid curing primer, called wash primer, in which for improvement of the adhering to the primer an additive based on alcohol is used as dilution.

The used wash primer is a so called non-filling wash primer with a layer thickness between 5 and 10 $\mu$m.

The mixing ratio in volume parts:

100 volume parts standard coating wash primer
100 volume parts hardening agent for wash primer

10 volume parts isobutyl alcohol or similar product Wash primers (general)

Wash primers, also called etching ground varnish, also belong to the catalytic hardening agents. In general, these give an excellent bonding to metals, while furthermore the paint system to be applied afterwards normally bonds very well on the wash primer.
The binding agent of the "classic" wash primer consists of polyvinyl butyral. Formula structure:

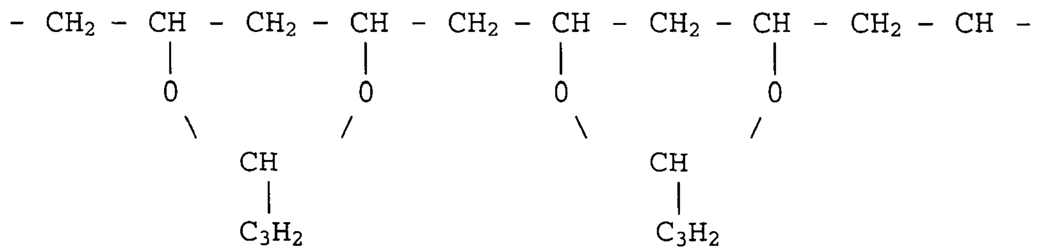

The polyvinyl butyral chain consists of another number of OH-groups. Besides a solvent of this polyvinyl butyral, a wash primer also contains zinctetra oxychromate $ZnCrO \cdot 4Zn(HO)_2$ as pigment. Just before use a phosphoric acid containing hardener is added. The reaction mechanism is very complex. The phosphoric acid reacts with the metal basis (etch working) and with the pigment and in addition stimulates a further polymerisation catalytically of the binding agent. These simultaneously developing reactions lead to an excellent bonding on metals.

As the concentration of the (hygroscopic) phosphoric acid is very important for a good development of the wash primer-reaction, a wash primer is generally during the application and drying more of less sensitive to a high air humidity. Through different kinds of ingenious modifications one has succeeded to compose different wash primer variations, such as one-pot-wash-primers, filling wash primers and white wash primers. These modified wash primers can be used less universally than the original "classic" type and is in use therefore limited to certain systems.

The advantage is, a very suitable under-layer on the plastic film in order to apply the paint with a brush, fluff-free roller brush, spray-painting or casting, which paint layer then bonds excellently to the film.

Furthermore, the film according to the invention is further developed in such a way, that said paint layer with thickness D2 of approximately 25 μm based on silicone alkyd resin, is especially for exterior work.

The advantage is, a very stable paint layer for use in open air on surfaces and substrates of subjects.

Furthermore, the film according to the invention is further developed in such a way, that when applying the film, said film is rinsed with an overmeasure water with 1/2 percentage by weight liquid soap, such as, for example, Lodaline or a similar product, for a correct application of the film or foil onto the surface to be protected.

The advantage is, that the film can be moved easily over the surface to be covered, so that all folds can be smoothed out easily and an excellent result is achieved. On narrow parts more attention is needed for smoothening. The remaining soapy water disappears completely within 4 weeks and the film or foil remains completely tight on the substrate. At very narrow parts of the construction a mechanical load is sometimes necessary.

In short, with the plastic film according to the invention large surfaces, such as doors, panels, walls and such can be provided with an excellent bonding and durable paint layer, in which edges, rebates and narrow parts, for economical reasons, must be painted with a brush. It is also possible to provide interior spaces of objects with substrates of high quality film/coating systems without any load by evaporation of components of paint to the environment, such as, for example, in operation rooms/theatres as well as public spaces, this system can be used suitably and quickly without any smelly and annoying chemical vapours.

The advantage is, that the self-adhering film with paint layer can be made elsewhere and therefore few man-hours are needed for the application.

The self-adhering film with paint layer in all possible colours can be delivered in handy-sized rolls of approximately 30m and a width of approximately 1,20m (0,90m is available on request). Any colour of paint can be applied on the self-adhering film, in which every gloss-finish degree is possible without extra costs and limitations. So, the self-adhering film as carrier of paint products can be used in the most broad sense with a minimum life of 10 to 15 years in the open air.

The application of the self-adhering polyester film with a layer of paint on, for example, wooden surfaces should be done step by step as follows:

- Rub or sand the existing surface smoothly and level until a level paint layer remains;
- apply or spray water with additive cleaner, remove roughly and let dry;

- pre-coat bare spots very thinly and rub or sand finish smoothly;
- make the surface dust-free with, for example, an adhesive cloth, ground bare spots once or twice with a good primer, dependant on the substrate, if necessary fill and pre-coat;
- apply self-adhering film with a layer of paint with an overmeasure of water and some soap at the adhering side and smooth down.

The guidelines and systems of said treatments are indicated in the "Paint technical handbook" from AKZO Nobel Decorative Coatings b.v., Sikkens Construction coatings. Edition February 2005 SAP 6001489 03/05 or a similar technical documentation for building systems, these guidelines are also applicable.

The advantages and/or experiences with self-adhering film provided with a layer of paint are successively:

- that after checking the executed exterior works of a shopping mall in Heerhugowaard and Walibi in the Flevopolder, the concerned film still bonds well after approximately 18 years. So, outdoors the paint system has a durability life of more than 10 years;
- the paint layer is possible in any colour in high gloss or silky finish;
- every film user can use the self-adhering film with layers of paint, if he/she pre-treats the substrate smoothly as indicated above;
- the technical characteristics of the polyester film are further formulated below and serve as starting point for a good result.

The basic polyester film (thickness 25 microns) has the following characteristics:

Mechanical characteristics

| Characteristic | part | test method |
|---|---|---|
| Maximum | 1750 kg/cm$^2$ | ASTM-D-882-A |
| Elasticity | 25,000 psi | |
| Loaded with 3% elongation | 13,000 psi | ASTM-D-882-A |
| Loaded with 5% elongation | 15,000 psi | ASTM-D-882-A |
| Max. elongation | 90-120% | ASTM-D-882-A |
| Tear strength | 20-30 grams | ASTM-D-1922 |
| Tear strength | >5.0 kg/cm$^2$ | IS:1060Part1 |
| Point load | 47.6 Ozs. (impress) | IS:4006Part1 |
| Wrinkle/fold Resistance | 17,800 cycles | ASTM:D2176-6T (90 double) |
| Shock load | 6.0 kg/cm$^2$/mil | DuPont Impact |
| Thermal characteristics | | |
| Melting point | 250-255°C | Fisher-John |
| Shrink at heat (150°C/30 min.) | 1-2% | ASTM D1204-54 |
| Temperature resistance | -70/130°C | |
| Flame resistance | 85 mm per unit of time | ASTM 1894-63 |
| Coeff. of expansion | 5*10-$^6$per °C | |
| Conduction(10 mil) | $3.0*10^{-4}\ \frac{(cal.)\ (cm)}{(cm^2)(sec.)(\ C)}$ | |
| Deformation relief | Bij 1.5% | |
| Burning | No dripping | |
| Physical Characteristics | | |
| Density | 1.39-1.40 kg/dm$^3$ | |
| Water absorption | 0.2-0.5% | ATSM-D-570 |

(continued)

| | | | |
|---|---|---|---|
| Physical Characteristics | | | |
| Breaking index | 1.64-1.67 | | |
| Light transmission | >90% nD 25°C in visible area. | ATSM 542-50 | |
| Kinetic frictional coefficent | 0.38-0.45 | ATSM 1894-63 | |
| Permeable Characteristics | | | |
| Water vapour | 14-20 g/m$^2$/24h | ASTM-E-96-66 (38 C&90%RV) | |
| Oxygen | 85-95 ml/m$^2$/24h /0.1 Mpa | | |
| Organic vapour Permeable marked | | | |
| Air | 26-32 sec/m1/cm$^2$ | IS:4006Part1 (24 C&71%RV) | |
| Carbon dioxide | 16ml/100sq. in 24h/0.1 MPa/mil | ATSM D1434-64 | |
| Nitrogen | 1 ml/100sq.in. 24h/0.1 MPa/mil | ASTM D1434-64 | |
| Acetone | 2.22g/100sq.in. 24h/mil | + | |
| Benzene | 0.36 ml/100 sq.in. 24h/mil | + | |
| Carbonic acid tetra-chloride | 0.08 ml/100 sq.in. 24h/mil | + | |
| Ethyl acetate | 0.12 ml/100 sq.in. 24h/mil | + | |
| Hexane + Modified ATSM E96-63T | 1.8 ml/100 sq.in. | + | |
| Chemicals resistance | | | |
| Resistance against | | Result | |
| % elasticity strength recovers | | % expansion recovers | % tear strength recovers |
| Acetic acid 10% | 100 | 100 | 100 * |
| Hydrochloric 10% | 100 | 100 | 100 * |
| Sodium hydroxyde | 2% 100 | 100 | 70 * |
| Ammonia 10% | 0 | 0 | 0 * |
| Trichloroethylene | 100 | 100 | 100 * |
| Hydro carbon oil Phenol resin, | 92 | 3 | 87 ** |
| GE 1678 | 92 | 3 | 73 *** |
| * 31 days at 23°C | | | |
| ** 500 hours at 100°C | | | |
| *** Enamelled 168 hours at 150°C test method | | | |
| Liquid absorption | <0.8% | 24 h op 23°C 92% RV | ATSM D570-63 |

Guideline for using the plastic film treated with paint on different element widths:

PANELS

Reflecting film, not scratch resistant, in a light colour.
Thickness: approximately 25 μm
Non-reflecting film, not scratch resistant, in a light colour.
NARROW CONSTRUCTION PARTS, with, amongst others, narrow upright parts.
Non-reflecting film, not scratch resistant, in a light colour.
Thickness: approximately 16 μm
Finally it has to be emphasized, that the above description constitutes a preferred embodiment of the self-adhering film provided with a decorative layer of paint according to the invention and that further modifications and such are possible without departing the scope of this patent description.

## Claims

1. Film or foil designed as self-adhering plastic film, which is provided with an adhering layer with removable covering on one side, such as films often available on the market and on the other side of the film or foil is provided with a

layer of paint, in which said film serves as protection for surfaces of engineering structures, vehicles or subjects in general and such against more or less corrosive environments and, of course, also for decoration by a colour combination of said surfaces, **characterized in that**, said film is a plastic film with thickness D1, in which on one side the surface of the film is pre-treated with a special or roughening sponge for applying a layer of paint with thickness D2, in which distilled water with an added 1:n volume part cleaner is used, after which a primer layer with thickness D3 is applied, in which the other side of the film is provided with an adhering layer with a UV-resistant glue, in which said adhering layer is finished before use with a removable covering in the shape of a disposable film.

**2.** Film as claimed in claim 1, **characterized in that**, said film is a reflecting polyester film with thickness D1 of approximately 25 μm and a non-reflecting polyester film with thickness D1 of approximately 16 μm.

**3.** Film as claimed in claim 1, **characterized in that**, said sponge is a specially layered scourer with rough outer surfaces.

**4.** Film as claimed in claims 1-3, **characterized in that**, said cleaner as replacement of ammonia is a biodegradable product, such as, for example, Universol, in which n is approximately 100.

**5.** Film as claimed in claims 1-4, **characterized in that**, said primer layer with thickness D3 of approximately 5-10μm is build up with an acid curing primer, called wash primer, in which for improvement of the adherence to the primer an additive based on alcohol is used as dilution.

**6.** Film as claimed in claim 5, **characterized in that**, said additive based on alcohol as dilution is 10% isopropyl alcohol with a mixing ratio 1:1 with said primer.

**7.** Film as claimed in claim 1, **characterized in that,** said UV-resistant glue of the adhering layer can be delivered as a standard additional supply by the supplier.

**8.** Film as claimed in claim 1, **characterized in that**, said paint layer with thickness D2 of approximately 25 μm based on silicone alkyd resin, is especially for exterior work.

**9.** Film as claimed in claim 8, **characterized in that**, said paint based on silicone alkyd resin is diluted with 5 to 10 percentage by weight white spirit, depending on the season and temperature.

**10.** Film as claimed in claim 7, **characterized in that**, when applying the film, said film is rinsed off with an overmeasure water with ½ percentage by weight liquid soap, such as, for example, Lodaline or a similar product, for a correct application of the film onto the surface to be protected.

European Patent Office

# EUROPEAN SEARCH REPORT

Application Number
EP 06 07 5933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/028709 A (3M INNOVATIVE PROPERTIES CO [US]; MORI YUTAKA [JP]; IKEDA SHINJI [JP]) 8 April 2004 (2004-04-08)<br>* figure 2 *<br>* page 6, lines 15-21 *<br>* page 8, line 9 - page 9, line 24 *<br>* page 1, lines 4-10 *<br>----- | 1-10 | INV.<br>C09J7/02<br>B44C1/10 |
| X | EP 1 283 107 A (LINTEC CORP [JP]) 12 February 2003 (2003-02-12)<br>* claims *<br>* example 1 *<br>----- | 1-10 | |

TECHNICAL FIELDS SEARCHED (IPC)

C09J
B44C
C08J

The present search report has been drawn up for all claims

| Place of search | Date of completion of the search | Examiner |
|---|---|---|
| The Hague | 7 June 2007 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 07 5933

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2007

| Patent document cited in search report | Publication date | Patent family member(s) | Publication date |
|---|---|---|---|
| WO 2004028709 A | 08-04-2004 | AU 2003265640 A1 | 19-04-2004 |
| | | JP 2004115657 A | 15-04-2004 |
| EP 1283107 A | 12-02-2003 | JP 2003025478 A | 29-01-2003 |
| | | US 2003096119 A1 | 22-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020192462 A1
- US 9513969 W
- WO 9613547 A